# EUROPÄISCHE PATENTANMELDUNG

(11) **EP 3 713 189 A1**
(43) Veröffentlichungstag der Anmeldung: **23.09.2020**
(21) Anmeldenummer: 19164617.3
(22) Anmeldetag: 22.03.2019
(51) Int. Cl.: H04L 29/06, G06F 21/55

(54) **INTRUSIONSERKENNUNG BEI COMPUTERSYSTEMEN**

(71) Anmelder: Siemens Aktiengesellschaft, 80333 München (DE)
(72) Erfinder: Sel, Tolga, 80809 München (DE)

(57) **Zusammenfassung**

Ein Analysegerät (111, 111-1, 111-2, 111-3) ist eingerichtet, um mit mindestens einem Knoten (121, 121-1, 121-2, 121-3) einer Infrastruktur (129) einer verteilten Datenbank (200) über die Kommunikationsschnittstelle (114) zu kommunizieren, um eine Autorisierung (193) zur Intrusionserkennung eines Computersystems (101) zu erhalten. Außerdem ist das Analysegerät eingerichtet, um in Abhängigkeit davon, ob die Autorisierung (193) erhalten wird, die Intrusionserkennung des Computersystems (101) basierend auf einer Analyse von Log-Nachrichten (191) des Computersystems (101) durchzuführen.

## Beschreibung

### TECHNISCHES GEBIET

Verschiedene Beispiele betreffen im Allgemeinen Techniken zur Intrusionserkennung bei Computersystemen basierend auf einer Analyse von Log-Nachrichten des Computersystems. Verschiedene Beispiele betreffen insbesondere die Verwendung einer verteilten Datenbank im Zusammenhang mit der Intrusionserkennung.

### HINTERGRUND

Ein Analysegerät zur Intrusionserkennung (engl. Intrusion Detection System; IDS) ist ein Gerät, das Computersysteme (z.B. einzelne Computer oder Netzwerke umfassend mehrere Computer) überwacht und zum Ziel hat, Angriffe zu erkennen. Generell verwenden IDS zwei verschiedene Techniken zur Angriffserkennung. Erstens: Die Signatur-basierte (engl.: signature-based) Angriffserkennung nutzt in einer Datenbank hinterlegte Angriffsmuster, um das aktive Computersystem zu überwachen. Angriffe werden erkannt, indem Angriffssignaturen aus der Datenbank mit dem aktiven Systemverhalten verglichen werden. Stimmt die hinterlegte Angriffssignatur mit dem aktuellen Systemverhalten überein, so schließt das IDS auf einen Angriff zurück. Zweitens: Anomalie-basierte IDS. Diese Technik versucht Angriffe zu detektieren, indem sie Veränderungen im Systemverhalten des Computersystems erkennt. Das bedeutet, dass das IDS im ersten Schritt das normale Verhalten des Computersystems lernt/analysiert (bzw. eine vertrauenswürdige dritte Instanz lernt das normale Verhalten), um im zweiten Schritt das aktive Verhalten des Systems mit dem zuvor erlernten normalen Verhalten zu vergleichen. Weicht das aktuelle Verhalten von dem zuvor erlernten normalen Verhalten ab, so kann dies als Anomalie gewertet werden und ist unter Umständen ein Zeichen für einen Angriff oder die Kompromittierung des Computersystems. Die Entscheidung, ob das System von dem normalen Verhalten abgewichen ist, kann mittels statistischer Methoden oder Algorithmen des maschinellen Lernens (engl. Machine Learning) bewerkstelligt werden.

Ein Host-basiertes IDS (HIDS) ist auf einem Computersystem installiert und sammelt Informationen über dessen Betriebszustand, um mithilfe dieser Informationen Angriffe zu erkennen. Ein Netzwerk-basiertes IDS (engl. network-based Intrusion Detection System, NIDS) versucht, Angriffe durch Analyse des Netzwerkverkehrs zu entdecken. Sowohl beim HIDS, als auch beim NIDS werden typischerweise Log-Nachrichten des aktuellen Systemverhaltens erstellt. Log-Nachrichten dokumentieren das Systemverhalten. Diese Log-Nachrichten werden anschließend vom IDS analysiert und bewertet. Das Resultat dieser Analyse gibt Aufschluss darüber, ob ein Angreifer aktiv war/ist oder nicht.

Solche vorbekannten Techniken weisen bestimmte Nachteile und Einschränkungen auf. Angreifer, die die Kontrolle über ein Computersystem bzw. das IDS erlangen, können die Analyse der Log-Nachrichten manipulieren. Konkret bedeutet das: Obwohl die Log-Nachrichten Hinweise über einen Angreifer beinhalten, stimmt das Ergebnis der Analyse nicht, da das IDS inzwischen vom Angreifer kontrolliert wird und dementsprechend das Ergebnis abgefälscht ist. Das bedeutet, bekannte IDS können eine limitierte Sicherheit gegenüber Manipulation aufweisen.

### KURZE ZUSAMMENFASSUNG DER ERFINDUNG

Deshalb besteht ein Bedarf für verbesserte Techniken zur Intrusionserkennung eines Computersystems. Insbesondere besteht ein Bedarf für sichere und effiziente Techniken zur Intrusionserkennung.

Diese Aufgabe wird gelöst von den Merkmalen der unabhängigen Patentansprüche. Die Merkmale der abhängigen Patentansprüche definieren Ausführungsformen.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart-Vertrag" bezeichnet werden kann.

Ein IDS umfasst einen Prozessor und eine Kommunikationsschnittstelle. Dabei ist der Prozessor eingerichtet, um Programmcode aus einem Speicher zu laden und auszuführen und basierend darauf die folgenden Schritte auszuführen: Kommunizieren mit mindestens einem Knoten einer Infrastruktur einer verteilten Datenbank über die Kommunikationsschnittstelle, um eine Autorisierung zur Intrusionserkennung eines Computersystems zu erhalten; und in Abhängigkeit davon, ob die Autorisierung erhalten wird: Durchführen der Intrusionserkennung des Computersystems basierend auf einer Analyse von Log-Nachrichten des Computersystems, die über die Kommunikationsschnittstelle vom Computersystem empfangen werden.

Ein Verfahren umfasst: Kommunizieren mit mindestens einem Knoten einer Infrastruktur einer verteilten Datenbank, um eine Autorisierung zur Intrusionserkennung eines Computersystems zu erhalten. Das Verfahren umfasst auch, in Abhängigkeit davon, ob die Autorisierung erhalten wird: Durchführen der Intrusionserkennung des Computersystems basierend auf einer Analyse von Log-Nachrichten des Computersystems, die vom Computersystem empfangen werden.

Ein Computer-Programm oder ein Computer-Programmprodukt oder ein Computer-lesbares Speichermedium umfasst Programmcode. Der Programmcode kann von einem Prozessor ausgeführt werden. Das bewirkt, dass der Prozessor ein Verfahren ausführt, welches umfasst: Kommunizieren mit mindestens einem Knoten einer Infrastruktur einer verteilten Datenbank, um eine Autorisierung zur Intrusionserkennung eines Computersystems zu erhalten. Das Verfahren umfasst auch, in Abhängigkeit davon, ob die Autorisierung erhalten wird: Durchführen der Intrusionserkennung des Computersystems basierend auf einer Analyse von Log-Nachrichten des Computersystems, die vom Computersystem empfangen werden.

Ein Knoten einer Infrastruktur einer verteilten Datenbank umfasst einen Prozessor und eine Kommunikationsschnittstelle. Dabei ist der Prozessor eingerichtet, um Programmcode aus einem Speicher zu laden und auszuführen und basierend darauf die folgenden Schritte auszuführen: Ausführen eines Smart-Vertrags, um einen entsprechenden Ergebniswert zu erhalten; und Auswählen von mindestens einem IDS aus einer Vielzahl von IDSs in Abhängigkeit vom Ergebniswert; und Kommunizieren mit dem mindestens einen IDS über die Kommunikationsschnittstelle, um dem mindestens einen IDS eine Autorisierung zur Intrusionserkennung eines Computersystems zu erteilen.

Ein Verfahren umfasst: Ausführen eines Smart-Vertrags, um einen entsprechenden Ergebniswert zu erhalten; und Auswählen von mindestens einem IDS aus einer Vielzahl von IDSs in Abhängigkeit vom Ergebniswert; und Kommunizieren mit dem mindestens einen IDS, um eine Autorisierung zur Intrusionserkennung eines Computersystems an das mindestens eine IDS zu erteilen.

Ein Computer-Programm oder ein Computer-Programmprodukt oder ein Computer-lesbares Speichermedium umfasst Programmcode.

Der Programmcode kann von einem Prozessor ausgeführt werden. Das bewirkt, dass der Prozessor ein Verfahren ausführt, welches umfasst: Ausführen eines Smart-Vertrags, um einen entsprechenden Ergebniswert zu erhalten; und Auswählen von mindestens einem IDS aus einer Vielzahl von IDSs in Abhängigkeit vom Ergebniswert; und Kommunizieren mit dem mindestens einen IDS, um eine Autorisierung zur Intrusionserkennung eines Computersystems an das mindestens eine IDS zu erteilen.
Ein Computersystem umfasst einen Prozessor und eine Kommunikationsschnittstelle, wobei der Prozessor eingerichtet ist, um Programmcode aus einem Speicher zu laden und auszuführen, und basierend darauf die folgenden Schritte auszuführen: Empfangen einer Registrierungsinformation von einem IDS über die Kommunikationsschnittstelle. Dabei ist die Registrierungsinformation indikativ für eine Identität des IDS. Der Prozessor ist auch eingerichtet, um eine Verifikation der Registrierungsinformation, etwa durch Abgleich mit einem entsprechenden Eintrag in einer verteilten Datenbank, auszulösen. Der Prozessor ist auch eingerichtet, um in Abhängigkeit von einem Ergebnis der Verifikation Log-Nachrichten des Computersystems an das IDS und über die Kommunikationsschnittstelle zu übertragen.

Ein Verfahren umfasst: Empfangen einer Registrierungsinformation von einem IDS, wobei die Registrierungsinformation indikativ für eine Identität des IDSs ist; und Auslösen einer Verifikation der Registrierungsinformation, etwa durch Abgleich mit einem entsprechenden Eintrag in einer verteilten Datenbank oder auch eine Infrastruktur eines öffentlichen Schlüsselmaterials (engl. public-key infrastructure); und in Abhängigkeit von einem Ergebnis der Verfikation: Übertragen von Log-Nachrichten des Computersystems an das IDS.

Ein Computer-Programm oder ein Computer-Programmprodukt oder ein Computer-lesbares Speichermedium umfasst Programmcode. Der Programmcode kann von einem Prozessor ausgeführt werden. Das bewirkt, dass der Prozessor ein Verfahren ausführt, welches umfasst: Empfangen einer Registrierungsinformation von einem IDS, wobei die Registrierungsinformation indikativ für eine Identität des IDS ist; und Auslösen einer Verifikation der Registrierungsinformation, etwa durch Abgleich mit einem entsprechenden Eintrag in einer verteilten Datenbank; und in Abhängigkeit von einem Ergebnis der Verifikation: Übertragen von Log-Nachrichten des Computersystems an das IDS.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Embedded Systems, Mikrocontroller, Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speicher", einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein.

Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweiten Datums zusammen in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter "Ausführen eines Smart-Vertrag" bzw. einem "Smart-Vertrag-Prozess" kann im Zusammenhang mit der Erfindung insbesondere ein Ausführen eines Programmcodes (z. B. der Steuerbefehle) in einem Prozess durch das verteilte Datenbanksystem bzw. deren Infrastruktur verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen beziehen. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transkation eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transkation noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in der entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" und/oder als "authentzitätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Hinterlegen im verteilten Datenbanksystem" bzw. unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart-Vertrag realisiert. Beispielsweise können im Zusammenhang mit der Erfindung unter Transaktion auch eine Steuertransaktionen und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten, Machine Learning Algorithmen, Hash-Werte der Algorithmen, sonstige Variablen, etc.).

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Vertrag) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart-Vertrag" kann im Zusammenhang mit der Erfindung beispielsweise ein ausführbarer Programmcode verstanden werden [4][5] (siehe insbesondere Definition "Programmcode"). Der Smart-Vertrag ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart-Vertrag auf die gleiche Weise ausgeführt werden, wie dies bei der Definition von "Programmcode", insbesondere im Zusammenhang mit der Erfindung, erläutert ist.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1][4][5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure, Siemens Mindsphere, erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass (alle) Kanten (immer) die gleiche Richtung haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten können bzw. von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1][4][5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once" [2] oder "number used once" [3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über das dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1][4][5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer des verteilten Datenbanksystems (z. B. der Blocckette) sind (also keine Operationen mit dem verteilten Datenbanksystem durchführen oder diese nur abfragen, ohne jedoch Transaktionen durchzuführen, Datenblöcke einfügen oder Proof-of-Work-Nachweise berechnen), verstanden werden. Alternativ kann insbesondere auch unter einem Rechner ein Knoten des verteilten Datenbanksystems verstanden werden. Mit anderen Worten kann insbesondere unter einem Gerät ein Knoten des verteilten Datenbanksystems verstanden werden oder auch ein Gerät außerhalb der Blockkette bzw. des verteilten Datenbanksystems verstanden werden. Ein Gerät außerhalb des verteilten Datenbanksystems kann beispielsweise auf die Daten (z. B. Transaktionen oder Steuertransaktionen) des verteilten Datenbanksystems zugreifen und/oder von Knoten (z. B. mittels Smart-Contracts und/oder Blockketten-Orakel) angesteuert werden. Wird beispielsweise eine Ansteuerung bzw. Steuerung eines Gerätes (z. B. ein als Knoten ausgebildetes Gerät oder ein Gerät außerhalb des verteilten Datenbanksystems) durch einen Knoten realisiert, kann dies z. B. mittels eines Smart-Contracts erfolgen, der insbesondere in einer Transaktion des verteilten Datenbanksystems gespeichert ist.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

### KURZE BESCHREIBUNG DER FIGUREN

- FIG. 1: illustriert ein System mit einem Computersystem, einer Blockketten-Infrastruktur und einem IDS gemäß verschiedenen Beispielen.
- FIG. 2: ist ein Flussdiagramm eines beispielhaften Verfahrens.
- FIG. 3: ist ein Flussdiagramm eines beispielhaften Verfahrens.
- FIG. 4: ist ein Flussdiagramm eines beispielhaften Verfahrens.
- FIG. 5: illustriert schematisch die Funktionsweise des IDS gemäß verschiedener Beispiele.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken im Zusammenhang mit der Intrusionserkennung eines Computersystems beschrieben. Das Computersystem kann zum Beispiel ein einzelner Computer oder ein Netzwerk umfassend mehrere Computer sein.

Die Intrusionserkennung ist auf einem IDS implementiert. Das IDS ist im Allgemeinen räumlich und funktionell beabstandet vom Computersystem angeordnet. Das bedeutet, dass das IDS und das Computersystem verschiedene Betriebssysteme oder Betriebssystem-Instanzen verwenden können. Das IDS und das Computersystem können in unterschiedlichen Räumen oder Orten oder Ländern angeordnet sein.

In manchen Beispielen, können das IDS und das Computersystem aber auch co-implementiert sein. Eine beispielhafte Implementierung sähe wie folgt aus: Das Computersystem läuft im normalen Modus. Das IDS läuft in einem abgesicherten Environment auf demselben Gerät. Unter anderem könnte das abgesicherte Environment ein Trusted Execution Environment (siehe z.B. von ARM das TEE / Trust Zone) sein. Da das Trusted Execution Environment durch physische CPU interne Maßnahmen vom normalen Betriebssystem getrennt ist, könnte das eine alternative Implementierungsart mit hoher Sicherheit sein.

Die hierin beschriebenen Techniken zur Intrusionserkennung verwenden eine Analyse von Log-Nachrichten des Computersystems. Im Allgemeinen können solche Log-Nachrichten indikativ für das aktuelle Systemverhalten des Computersystems sein. Zum Beispiel können die Log-Nachrichten indikativ für ein oder mehrere der folgenden Elemente sein: Systemaufrufe, Datenzugriffe, Netzwerkpakete, Kommunikationsprotokolle, Nutzer-Login, fehlgeschlagene Aufrufe, aktive Netzwerkverbindungen usw.

Im Allgemeinen kann die Analyse eine Signatur-basierte Angriffserkennung verwenden, d.h. das aktuelle Systemverhalten mit einem in einer Datenbank hinterlegten Angriffsmuster vergleichen. Alternativ oder zusätzlich wäre es auch möglich, dass die Analyse statistische Methoden oder Algorithmen des maschinellen Lernens einsetzt, etwa um Anomalien zu erkennen. Auch andere Algorithmen können verwendet werden, etwa Anomaliedetektion.

Die hierin beschriebenen Techniken ermöglichen eine unkonventionelle und neuartige Technik im Zusammenhang mit der Intrusionserkennung. Insbesondere ist es mittels der hierin beschriebenen Techniken möglich, durch das Zusammenspiel von mehreren unterschiedlichen Geräten eine besonders sichere und effiziente Intrusionserkennung zu ermöglichen. Insbesondere kann durch die Verwendung von mehreren Geräten die Verwendung einer einzelnen zentralen Autorität vermieden werden. Dies wird nachfolgend noch näher erläutert.

In einer Referenzimplementierung erfolgt die Analyse der Log-Nachrichten auf einer zentralen Instanz, welches in einem gesicherten Umfeld mit erhöhten Sicherheitsmaßnahmen betrieben wird. Probleme solch einer zentralen Instanz gemäß Referenzimplementierung sind: Erstens: Für das gesamte Ecosystem wird die zentrale Instanz als zentraler Sicherheitsknoten gesehen und könnte somit einen "Single Point of Failure" darstellen. Daher muss das System nicht nur zur Laufzeit integer sein, sondern auch die Integrität früherer Analysen müssen abgesichert werden. Das macht die zentrale Analyseinstanz komplex, kostspielig und ist ein Single Point of Failure. Zweitens: Da eine zentrale Instanz üblicherweise für mehrere Clients die Analyse durchführt, muss solch ein System eine sehr hohe Up-Time durch Redundanzmechanismen gewährleisten. Das macht die zentrale Analyseinstanz ebenfalls komplex und kostspielig. Drittens: Solche Systeme sind oftmals komplex, da mehrere Clients parallel bedient werden müssen (remote attestation for multiple devices, hohe Parallelisierung).

Um gegenüber einer solchen Referenzimplementierung eine vereinfachte und besonders sichere Intrusionserkennung zu ermöglichen, wird gemäß verschiedenen Beispielen eine verteilte Datenbank verwendet. In manchen Beispielen kann die verteilte Datenbank als Blockkette in einer Blockketten-Infrastruktur implementiert werden. Während nachfolgend vermehrt Beispiele im Zusammenhang mit einer Implementierung auf Grundlage einer Blockkette beschrieben werden, kann in anderen Beispielen auch eine andere Art von verteilter Datenbank eingesetzt werden.

In verschiedenen Beispielen werden sogenannte Smart-Verträge verwendet. Die Smart-Verträge können in der verteilten Datenbank hinterlegt sein und ausführbaren Programmcode beinhalten. Es können bestimmte Bedingungen bei der Ausführung des Programmcodes berücksichtigt werden und zum Beispiel kann ein Ergebnis des Smart-Vertrags von ein oder mehreren solchen Bedingungen abhängen.

Gemäß verschiedenen Beispielen können besonders kleine Smart-Verträge verwendet werden. Das heißt, dass die in den Smart-Verträgen abgebildete Logik im Vergleich zu anderen Implementierungen stark begrenzt sein kann. Dadurch können die Kosten der Smart-Verträge - zum Beispiel zu entrichten an einen Betreiber der Blockketten-Infrastruktur bzw. einen Betreiber eines Knotens der Blockketten-Infrastruktur - besonders gering sein und/oder auch zum Ausführen der Smart-Verträge aufgrund der reduzierten Größe besonders gering sein.

In verschiedenen Beispielen können Log-Nachrichten von einem zu überwachenden Computersystem dezentral in Abhängigkeit von einem Ergebnis des Ausführens eines Smart-Vertrags analysiert werden. Die Ergebnisse dieser Analyse können wiederum in der Blockkette gespeichert werden. Zum Beispiel kann das zu verwendende IDS aus mehreren Kandidaten-IDS in Abhängigkeit vom Ergebnis des Ausführens des Smart-Vertrags ausgewählt werden. Die Log-Nachrichten können über einen Ende-zu-Ende-Kanal am IDS direkt vom Computersystem empfangen werden; das bedeutet, dass die "Payload" (d.h. die Log-Nachrichten") nicht über die Blockkette abgewickelt werden müssen. Dies ermöglicht es, die durch die Blockkette implementierte Logik schlank und effizient zu halten. Ein oder mehrere Parameter des Ende-zu-Ende-Kanals könnten aber zwischen dem IDS und dem Computersystem unter Beteiligung der Blockkette ausgetauscht werden, z.B. Registrierungsinformation, die indikativ für eine Identifikation des IDS ist.

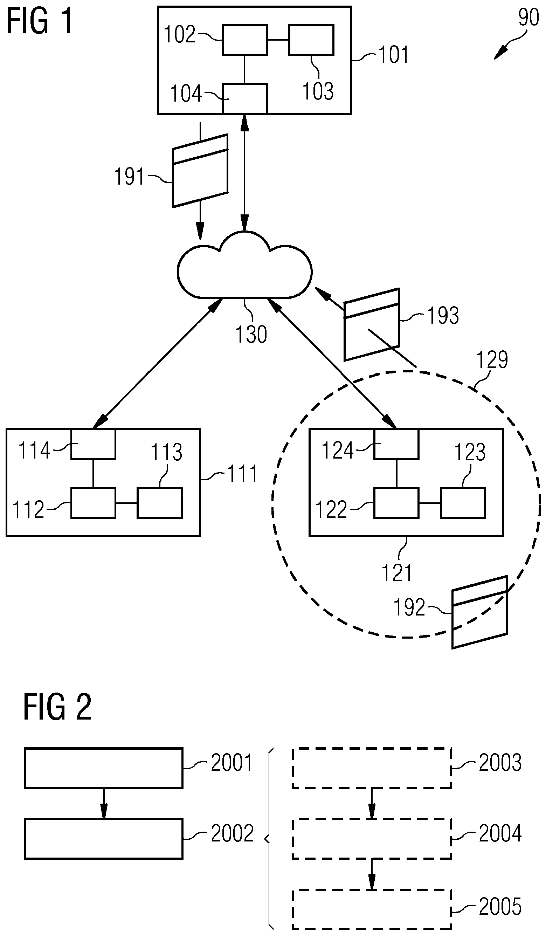

Fig. 1 illustriert ein System 90, das im Zusammenhang mit den verschiedenen hierin beschriebenen Techniken zur Intrusionserkennung verwendet werden kann.

Das System 90 umfasst ein Computersystem 101, im Beispiel der Fig. 1 implementiert durch einen einzelnen Computer. Das Computersystem 101 umfasst einen Prozessor 102, einen Speicher 103 sowie eine Kommunikationsschnittstelle 104. Der Prozessor 102 kann Programmcode aus dem Speicher 103 laden und ausführen. Dies bewirkt, dass der Prozessor verschiedene Techniken im Zusammenhang mit der hierin beschriebenen Intrusionserkennung durchführt: zum Beispiel das Empfangen, Verifizieren oder Ausführen von Informationen oder Daten über die Kommunikationsschnittstelle 104, das Erstellen von Log-Nachrichten, das Übertragen von Log-Nachrichten 191 über die Kommunikationsschnittstelle 104, usw.

Das Computersystem 101 ist über ein Kommunikationsnetzwerk 130 - beispielsweise das Internet oder ein lokales Netzwerk - mit weiteren Geräten verbunden. Im Beispiel der Fig. 1 ist auch ein IDS 111 vorgesehen. Das IDS 111 ist eingerichtet, um eine Intrusionserkennung für das Computersystem 101 auf Grundlage von Log-Nachrichten 191, die vom Computersystem 101 gesendet und beim IDS 111 empfangen werden, durchzuführen.

Dazu umfasst das IDS 111 einen Prozessor 112, einen Speicher 113 sowie eine Kommunikationsschnittstelle 114. Der Prozessor 112 ist über die Kommunikationsschnittstelle 114 mit dem Netzwerk 130 verbunden. Der Prozessor 112 kann wiederum Programmcode aus dem Speicher 113 laden und ausführen. Das Ausführen des Programmcodes bewirkt, dass der Prozessor 112 verschiedene Techniken im Zusammenhang mit der Intrusionserkennung wie hierin beschrieben ausführt, beispielsweise: Kommunizieren mit einem Knoten 121 einer Infrastruktur 129 einer verteilten Datenbank über die Kommunikationsschnittstelle 114; Erhalten eines Befehls zur Intrusionserkennung, z.B. durch Nachschlagen in der Blockkette und/oder durch Bewerben zur Hinterlegung von Registrierungsinformation; Durchführen der Intrusionserkennung des Computersystems 101 basierend auf einer Analyse der Log-Nachrichten 191; Empfangen und/oder Senden von Informationen bzw. Daten über die Kommunikationsschnittstelle 114; usw.

Das System 90 umfasst auch die Infrastruktur 129 der verteilten Datenbank, im Beispiel der Fig. 1 eine Blockketten-Infrastruktur 129. Die Blockketten-Infrastruktur 129 umfasst eine Vielzahl von Knoten, wobei im Beispiel der Fig. 1 insbesondere ein Knoten 121 dargestellt ist. Die verschiedenen Knoten können auch als Mining-Knoten bezeichnet werden und können entsprechend dem Knoten 121 gemäß Fig. 1 konfiguriert sein.

Der Mining-Knoten 121 im Beispiel der Fig. 1 umfasst einen Prozessor 122, einen Speicher 123 und eine Kommunikationsschnittstelle 124. Der Prozessor 122 ist wiederum über die Kommunikationsschnittstelle 124 mit dem Netzwerk 130 verbunden. Der Prozessor 122 kann Programmcode aus dem Speicher 123 laden und ausführen. Wenn der Prozessor 122 den geladenen Programmcode ausführt, bewirkt dies, dass der Prozessor 122 verschiedene Techniken im Zusammenhang mit der Intrusionserkennung wie hierin beschriebenen ausführt, beispielsweise: Ausführen eines Smart-Vertrags 192, der in der Blockkette gespeichert ist; Auswählen aus einer Vielzahl von IDSs, beispielsweise Auswählen des IDS 111 in Abhängigkeit von einem Ergebnis des Ausführens des Smart-Vertrags 192; Erteilen einer Autorisierung 193 für das ausgewählte IDS, beispielsweise das IDS 111, um die Intrusionserkennung auszulösen; Hinterlegen einer Registierungsinformation des ausgewählten IDS in Abhängigkeit von einer Bewerbung des Analysergeräts, um derart die Autorisierung zu erteilen.

Im Allgemeinen ist der Mining-Knoten 121 ein Teilnehmer der Blockketten-Infrastruktur 129, der Smart-Verträge 192 ausführen kann und versuchen kann, das Ergebnis des Ausführens des Smart-Vertrags 192 in der Blockkette abzuspeichern. In manchen Beispielen können Mining-Knoten 121 für das Ausführen von Smart-Verträgen bezahlt werden, wobei diese Bezahlung konditionell sein kann, wenn diese es schaffen, einen Block in der Blockkette zu generieren, der indikativ für das Ergebnis des Ausführens des Smart-Vertrags ist. Um diesen Block in der Blockkette zu generieren, müssen die Mining-Knoten 121 oftmals einen Konsensalgorithmus bzw. ein kryptographisches Rätsel (beispielsweise Proof-of-Work oder Proof-of-Stake oder ein anderes übliches Konsensalgorithmus) lösen; dies ist aber nicht immer erforderlich.

Nachfolgend werden verschiedene Begrifflichkeiten, die bereits zuvor im Zusammenhang mit Fig. 1 genannt wurden, näher erläutert. Die nachfolgend gegebenen Beschreibungen können in manchen Beispielen als Definitionen dienen. In anderen Beispielen können auch abweichende Implementierungen verwendet werden.

Smart-Verträge 192 sind Programme, die zur Blockkette geschrieben werden und einen Vertrag definieren. Dabei sind Smart-Verträge 192 Programme, die von Mining-Knoten 121 ausgeführt werden und für die Ausführung bezahlt werden. Beispiele für Smart-Verträge sind: "Wenn die Summe x von der Adresse y eintrifft, führe z aus." oder "Wenn die Summe y > 2*x von Adresse z eintrifft, sende 2*x an v." Ein Beispiel von Smart-Verträgen 192 sind sogenannte MultiSig-Contracts. MultiSig-Contracts sind Smart-Verträge 192, die nur ausgeführt werden können, wenn mehrere Knoten der Blockketten-Infrastruktur 129 der Gültigkeit eines Vertrages (d.h. einem Smart Contract) und damit deren Ausführung zustimmen.

Gas & Gas-Preis (sinngemäß Benzin) ist ein Medium, das benötigt wird, um Rechenoperationen in der Blockketten-Infrastruktur 129 betreiben zu können. Je rechenintensiver ein Smart-Vertrag 192 ist, desto mehr Gas wird benötigt. Der Gas-Preis gibt an, wie viel man gewillt ist, für eine Rechenoperation - etwa das Lösen eines kryptographischen Rätsels (etwa Proof-of-Work oder Proof-of-Stake) und/oder die Komplexität des auszuführenden Smart-Vertrages - an die Mining-Knoten 121 zu zahlen. Je mehr man zahlen möchte, desto größer ist die Wahrscheinlichkeit, dass der Smart-Vertrag 192 ausgeführt wird.

Orakel sind im Kontext einer Blockketten-Infrastruktur 129 eine Art von Agent, der Geschehnisse aus der realen Welt verifiziert und diese den Smart-Verträgen 192 bereitstellt. Ein Orakel kann auch als vertrauenswürdiger Dritter eingesetzt werden. Zum Beispiel wäre es möglich, dass ein Orakel Log-Nachrichten 191 vom Computersystem 101 empfängt. Zum Beispiel könnte das Orakel die Log-Nachrichten an ein oder mehrere IDSs 111 weiterleiten, z.B. wenn diese ausgewählt und authentifiziert sind, um die Intrusionserkennung durchzuführen.

Aufwecker: In manchen Implementierungen können sich Smart-Verträge 192 nach dem Ablaufen einer Periode nicht selbst ausführen. Um die Ausführung eines Smart-Vertrags 192 anzustoßen, existieren sogenannte Aufwecker. Aufwecker sind besondere Knoten der Blockketten-Infrastruktur, die Mining-Knoten 121 dafür bezahlen, bestimmte Smart-Verträge 192 auszuführen.

Computersystem 101: Die Log-Nachrichten 191 dieses Gerätes werden analysiert.

IDS 111 ist dafür zuständig, Log-Nachrichten 191 des Computersystems 101 zu analysieren. In manchen Beispielen kann eine Vielzahl von IDSs vorhanden sein, wobei daraus ein oder mehrere IDS 111 beauftragt werden, die Intrusionserkennung durchzuführen.

Nachfolgend wird die Funktionsweise des Systems 90 im Zusammenhang mit der Intrusionserkennung anhand der Flussdiagramme gemäß Fig. 2, Fig. 3 sowie Fig. 4 näher erläutert.

Fig. 2 ist ein Flussdiagramm eines beispielhaften Verfahrens. Zum Beispiel könnte das Verfahren gemäß Fig. 2 von einem IDS durchgeführt werden, zum Beispiel von dem IDS 111 des Systems 90 im Beispiel der Fig. 1. Insbesondere könnte das Verfahren gemäß Fig. 2 zum Beispiel vom Prozessor 112 basierend auf Programmcode, der aus dem Speicher 113 geladen wird, ausgeführt werden.

In Block 2001 erfolgt die Kommunikation mit mindestens einem Knoten einer Infrastruktur einer verteilten Datenbank, zum Beispiel mit dem Mining-Knoten 121 der Blockketten-Infrastruktur 129 im Beispiel der Fig. 1. Diese Kommunikation erfolgt, um eine Autorisierung zur Intrusionserkennung eines Computersystems - beispielsweise des Computersystems 101 - zu erhalten (vgl. Autorisierung 193 in Fig. 1).

In einem Beispiel könnte die Autorisierung auf einem Ergebniswert eines Smart-Vertrags, der von dem Knoten ausgeführt wird, basieren.

Manchmal könnte ein zweistufiger Prozess für die Autorisierung durchgeführt werden: (i) Wenn der Ergebniswert mit einer Registrierungsinformation des IDS 111 kompatibel ist, dann kann das IDS vor-autorisiert sein; (ii) das IDS kann sich dann bewerben, um endgültig autorisiert zu werden, nämlich durch Senden der Registrierungsinformation an die Blockketten-Infrastruktur, zur Hinterlegung der Registrierungsinformation in der Blockkette. Wenn diese Bewerbung erfolgreich ist, dann ist die Registrierungsinformation in der Blockkette hinterlegt, und das IDS 111 ist endgültig autorisiert. Dies bedeutet also, dass das IDS 111 aktiv überprüfen könnte, ob es die Autorisierung erhält, die Intrusionserkennung durchzuführen. Der Mining-Knoten 121 speichert in einer solchen Variante in der Blockkette die für die Intrusionserkennung vorausgewählten IDSs 111 ab. Die IDSs 111 sehen dann in der Blockkette nach - indem auf einen entsprechenden Speicher der Blockketten-Infrastruktur zugegriffen wird, d.h. in der Blockkette nachgeschlagen wird -, ob diese ausgewählt worden sind. In manchen Beispielen kann anschließend noch eine endgültige Bewerbung für die Beauftragung zur Intrusionserkennung erfolgen.

In einem anderen Beispiel könnte die Autorisierung aber auch als Befehl vom Mining-Knoten empfangen werden. Dann kann das IDS 111 die Autorisierung also passiv entgegennehmen.

Wenn die Autorisierung in Block 2001 erhalten wird, dann erfolgt in Block 2002 das Durchführen der Intrusionserkennung. Dies kann in manchen Beispielen auf einer Analyse von Log-Nachrichten des Computersystems basieren (vgl. Log-Nachrichten 191 in Fig. 1). Dazu können die Log-Nachrichten über eine Kommunikationsschnittstelle vom Computersystem empfangen werden. Dies kann, wie nachfolgend näher beschrieben werden wird, zum Beispiel als Reaktion auf eine entsprechende Anfrage (vergleiche Block 2004) erfolgen.

Die Analyse in Block 2002 kann basierend auf mindestens einem maschinengelernten Algorithmus basieren.

Zum Beispiel wäre es möglich, dass ein bestimmter Algorithmus, etwa ein bestimmter maschinengelernter Algorithmus aus einer Vielzahl von möglichen Kandidaten-Algorithmen ausgewählt wird. Diese Auswahl kann zum Beispiel basierend auf einem entsprechenden Eintrag in der Blockkette der Blockketten-Infrastruktur 129 erfolgen. Zum Beispiel könnte eine entsprechende Konfiguration über die Autorisierung 193 mitgeteilt werden. Weiterhin besteht die Möglichkeit, dass der Betreiber der Computersysteme 101, das IDS 111, Orakel, die maschinengelernten Algorithmen, den Smart-Vertrag, etc. beim Start der Blockketten-basierten Lognachrichtenanalyse, die notwendigen Parameter für das korrekte Betreiben des Gesamtsystems in die Blockkette fest über einen Mining-Knoten, Orakel, etc. verankert. Eine andere Implementierungsvariante des Bootstrappings könnte sein beim initialen Starten der Blockkette, die notwendigen Parameter in die Blockkette fest zu verankern.

Weiterhin könnten die Parameter beim Bootstrappen auch nur in Form eines Pointers zu einer externen Speichereinheit sein. In dieser externen Speichereinheit könnten jegliche Parameter hinterlegt sein, um das Gesamtsystem erfindungsgemäß zu betreiben. Beispielhaft könnten folgenden Parameter beim initialen Start an die Blockchain übergeben werden: vertrauenswürdige Orakel, zugelassene IDS 111, zugelassene Computersysteme 101, etc.... Eine solche Konfiguration wird manchmal auch als Bootstrapping bezeichnet.

In einer solchen Implementierung ist es also möglich, ein IDS zu betreiben, wobei aber keine zentrale Autorität verwendet werden muss, sondern vielmehr dynamisch in Abhängigkeit von der Autorisierung die Intrusionserkennung durchgeführt wird. Die Autorisierung kann selektiv an ein oder mehrere IDSs erteilt werden, die dynamisch ausgewählt werden. Dies erhöht die Sicherheit, da zum Beispiel in unterschiedlichen Instanzen unterschiedliche IDSs mit der Intrusionserkennung betraut werden können und es für einen Angreifer derart schwieriger wird, eine Korruption des IDSs durchzuführen. Indem die Autorisierung von einem Mining-Knoten, zum Beispiel als Ergebniswert eines Smart-Vertrags, der von dem Mining-Knoten ausgeführt wird, erhalten wird, kann auch die Verteilung der Autorisierungen angriffssicher ausgebildet werden.

Nachfolgend werden Details zum Block 2002 beschrieben. Der Block 2002 könnte zum Beispiel die Blöcke 2003 und 2004 und 2005 umfassen. Diese Blöcke 2003 bis 2005 sind aber im Allgemeinen optional

So erfolgt zum Beispiel in Block 2003 das Durchführen einer Bewerbung zum Hinterlegen von Registrierungsinformation. Diese Registrierungsinformation kann indikativ für die Identität des IDSs sein. Z.B. könnte die Registrierungsinformationen einen eindeutigen Kennzeichner umfassen, z.B. eine MAC-Adresse, einen Hardware Code, einen kryptographischen Schlüssel, usw. Die Registrierungsinformation wird in der Blockkette hinterlegt, d.h. kann der Blockketten-Infrastruktur bereitgestellt werden. Zum Beispiel könnte die Registrierungsinformation an den Mining-Knoten bereitgestellt werden, von dem zuvor die Autorisierung erhalten wurde. Dieser kann die Registrierungsinformation dann z.B. in den Smart-Vertrag schreiben, der zuvor ausgeführt wurde, um die Autorisierung zur Intrusionserkennung umzusetzen. Dazu kann der Mining-Knoten den Smart-Vertrag ausführen und anschließend ein kryptographisches Rätsel lösen, um die entsprechenden Daten in der Blockkette zu speichern.

Im optionalen Block 2004 wird dann eine Anfrage an das zu überwachende Computersystem 101 gesendet. Die Anfrage betrifft das Durchführen der Intrusionserkennung und ist indikativ für die Registrierungsinformation. Wenn die Bewerbung in Block 2003 erfolgreich war, ist die Registierungsinformation in der Blockkette hinterlegt; durch das Senden der Anfrage, die indikativ für die Registrierungsinformation ist, wird das Computersystem 101 in die Lage versetzt, die Anfrage mit der in der Blockkette hinterlegten Registrierungsinformation abzugleichen, um die Autorisierung des IDS 111 zu verifizieren. Dadurch wird also die Sicherheit gegenüber Manipulation erhöht.

Die Anfrage könnte zumindest eines von einem öffentlichen kryptographischen Schlüsselmaterial und einem Zertifikat des IDSs 111 beinhalten im Zusammenhang mit der Registrierungsinformation. Derart kann eine besonders hohe Sicherheit in der Kommunikation zwischen dem IDS 111 und dem Computersystem 101 erreicht werden.

In Block 2005 wird das Ergebnis der Intrusionserkennung in der Blockkette hinterlegt. Dazu könnte ein Ergebniswert der Analyse der Log-Nachrichten z.B. an den Mining-Knoten gesendet werden, von dem in Block 2001 die Autorisierung erhalten wurde und/oder könnte ein Ergebniswert an das Orakel und/oder einer weiteren dritten Instanz (Administrator, Betreiber, etc.) gesandt werden. Dies ist aber nur eine beispielhafte Implementierung. Es bestünde auch die Möglichkeit, eine entsprechende Funktion des Smart-Vertrags auszuführen. Damit kann verschiedenen Mining-Knoten 121 der Blockketten-Infrastruktur 129 die Möglichkeit gegeben werden, eine entsprechende Variable in einem Block der Blockkette zu speichern.

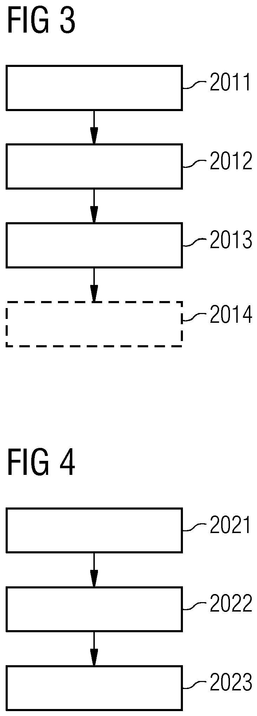

Fig. 3 ist ein Flussdiagramm eines beispielhaften Verfahrens. Zum Beispiel könnte das Flussdiagram gemäß Fig. 3 auf einem Knoten einer Infrastruktur einer verteilten Datenbank ausgeführt werden, zum Beispiel auf einem Mining-Knoten wie dem Mining-Knoten 121 der Blockketten-Infrastruktur 129 gemäß dem Beispiel der Fig. 1. Nachfolgend wird das Beispiel der Fig. 3 für eine Implementierung im Zusammenhang mit dem Mining-Knoten 121 beschrieben; es wäre aber in anderen Beispielen möglich, dass das Verfahren gemäß Fig. 3 von einem anderen Knoten ausgeführt wird.

In Block 2011 erfolgt das Ausführen eines Smart-Vertrags (vgl. Fig. 1, Smart-Vertrag 192). Zum Beispiel könnte der Smart-Vertrag ausgeführt werden, wenn ein Zeitgeber-Ereignis eintritt und/oder wenn eine externe Anfrage erhalten wird, zum Beispiel von einem Aufwecker und/oder als Reaktion auf ein Betriebs-bezogenes Ereignis am Computersystem 101.

Nachfolgend wird ein Beispiel zum Betriebs-bezogenen Ereignis am Computersystem 101 gegeben: Es wird angenommen, dass das Computersystem 101 ein Feldgerät in einer Produktionsumgebung ist (z.B. ein Roboterarm). Falls jetzt ein neuer Auftrag an den Roboterarm gesendet wird, um ein bestimmtes Produkt zu erstellen, so kann hier dieser neue Auftrag als Auslöseereignis zum Ausführen des Smart-Vertrags gesehen werden. Falls so ein Auslöseereignis eintritt, könnte die Integrität bzw. die Log-Nachrichten des Roboterarms überprüft werden. Hierzu muss nicht zwingend das Protokoll ganz abgefahren werden: Es genügt manchmal, die IDS 111, welche ausgewählt worden sind (siehe Variable 215 in Block 203) anzusteuern und dem IDS 111 über den Kanal 302 die jeweiligen Log-Nachrichten zu übersenden. Der Roboterarm kann mit der Produktion beginnen und erst zu einem späteren Zeitpunkt, kann der Betreiber der Produktionsanlage, durch kontrollieren der Variable 216 in Block 204, verifizieren, ob der Roboterarm nicht manipuliert ist, und somit das Produkt verkauft werden kann. Dies kann als externer Trigger bezeichnet werden.

Es wäre es möglich, dass das Ausführen des Smart-Vertrags in Block 2011 zumindest eines von einer Zufallskomponente, einer zeitvariablen Komponente, einer situationsvariablen Komponente und einer Authentifikation auf Grundlage der Blockkette umfasst. Dies bedeutet, dass je nach Situation und/oder Zeit oder aber auch zufällig jeweils ein unterschiedliches Ergebnis im Rahmen des Ausführens des Smart-Vertrags erhalten wird.

Dadurch kann erreicht werden, dass das Ergebnis des Ausführens des Smart-Vertrags durch einen Angreifer nicht oder nur schwer vorhergesehen werden kann bzw. das Ausführen des Smart-Vertrags durch einen Angreifer nicht oder nur besonders schwer manipuliert werden kann.

Dann wird in Block 2012 ein IDS aus einer Vielzahl von IDSs ausgewählt, und zwar in Abhängigkeit von einem Ergebnis des Ausführens des Smart-Vertrags 192. Zum Beispiel könnte eine erste Untermenge von IDSs (beinhaltend das IDS 111) ausgewählt werden, aus einer Vielzahl von potentiellen Kandidaten-IDSs. Dies bedeutet, dass je nach Ergebnis des Ausführens des Smart-Vertrags, eine andere Untermenge ausgewählt werden kann. Ein entsprechender Ergebniswert kann ausschlaggebend für diese Auswahl sein.

Dann erfolgt in Block 2013 das Kommunizieren mit dem ausgewählten IDS 111, um die Autorisierung 193 zum Durchführen der Intrusionserkennung zu erteilen. Dies basiert auf der Auswahl aus Block 2012.

Diese Erteilung der Autorisierung kann auf einer Bewerbung des IDS 111 oder im Allgemeinen von zumindest einigen der Vielzahl von Kandidaten-IDS erfolgen. Die Bewerbung kann durch diejenigen IDSs der Vielzahl von Kandidaten-IDSs erfolgen, die durch einen Ergebniswert des Ausführens des Smart-Vertrags vor-ausgewählt wurden; das entspricht einer ersten Auswahlstufe. In einer zweiten Auswahlstufe können dann die vorausgewählten Kandidaten-IDS eine Bewerbung bereitstellen, die deren Registrierungsinformation beinhaltet. Der Mining-Knoten 121 kann versuchen, diese Registierungsinformation dann in der Blockkette zu hinterlegen. Wenn dies erfolgreich ist, d.h. wenn die Bewerbung erfolgreich ist, dann ist das jeweilige IDS autorisiert.

In manchen Beispielen kann es erstrebenswert sein, in Block 2012 zu verhindern, dass ein IDS sehr viel Gas-Preis zahlt und somit von allen Mining-Knoten priorisiert wird, d.h. die Hinterlegung der jeweiligen Registierungsinformation priorisiert erfolgt. Um dies zu erreichen, kann per Smart-Vertrag 192 von vornhinein der Gas-Preis vordefiniert sein. Es kann auch ein gewisses Preisfenster vorgegeben sein. Falls der Gas-Preis für die Mining-Knoten nicht lukrativ ist, soll dieses Preisfenster oder der vordefinierte (fixe) Preis für alle gleichzeitig erhöht werden. Die Preiserhöhung kann über das Orakel geschehen oder über die IDS 111 oder über einen anderen Mechanismus.

Im optionalen Block 2014 wird das Ergebnis des Ausführens des Smart-Vertrags in der Blockkette hinterlegt. Alternativ oder zusätzlich könnte auch die Identifikation des Computersystems 101, für das die Intrusionserkennung befohlen wird, in der Blockkette hinterlegt werden. Alternativ oder zusätzlich könnte auch eine Identifikation des ausgewählten IDS 111 in der Blockkette hinterlegt werden. Derart kann eine Auditierbarkeit des Vorgangs ermöglicht werden.

Fig. 4 ist ein Flussdiagramm eines beispielhaften Verfahrens. Zum Beispiel könnte das Verfahren gemäß Fig. 4 von einem Computersystem ausgeführt werden, für das eine Intrusionserkennung durchgeführt werden soll. Zum Beispiel könnte das Verfahren gemäß Fig. 4 vom Computersystem 101 des Systems 90 gemäß dem Beispiel der Fig. 1 ausgeführt werden. Nachfolgend werden Beispiele im Zusammenhang mit dem Ausführen des Verfahrens gemäß Fig. 4 vom Computersystem 101 beschrieben, wobei entsprechende Beispiele alternativ auch durch andere Computersysteme ausgeführt werden könnten.

Zum Beispiel kann das Verfahren gemäß Fig. 4 vom Prozessor 102 des Computersystems 101 ausgeführt werden, basierend auf Programmcode, der aus dem Speicher 103 geladen wird.

In Block 2021 wird Registrierungsinformation vom IDS 111 empfangen. Das IDS 111 wurde mit dem Durchführen der Intrusionserkennung beauftragt. Insoweit korrespondiert Block 2021 mit Block 2004 gemäß Fig. 2. Die Registrierungsinformation ist indikativ für die Identität des IDSs.

In Block 2022 erfolgt dann das Auslösen einer Verifikation der Registrierungsinformation. Als allgemeine Regel gibt es mehrere Möglichkeiten, die Verifikation zu implementieren. Zum Beispiel kann die Verifikation durch Abgleich mit einer in der Blockkette hinterlegten Information erfolgen. Das Computersystem 101 könnte entsprechend in der Blockkette nachschlagen. Es wäre aber auch möglich, dass die Verifikation als Funktionalität der Blockkette, etwa den Smart-Vertrag 192 implementiert ist. Dann kann das Computersystem 101 die Verifikation durch eine entsprechende Anfrage auslösen. In einer weiteren Variante wäre es möglich, eine public-key-Infrastruktur zu Verifikation zu verwenden.

Durch die Verifikation kann sichergestellt werden, dass eine autorisierte Anfrage für Log-Nachrichten vorliegt.

Wenn die Verifikation in Block 2022 erfolgreich war - d.h. ein positives Ergebnis erhalten wird -, dann erfolgt in Block 2023 das Übertragen von Log-Nachrichten 191 an das nunmehr authentifizierte IDS 111, so dass dieses die Intrusionserkennung durchführen kann. Das Übertragen der Log-Nachrichten 191 könnte auch solange verzögert werden, bis z.B. ein bestimmtes Betriebs-bezogenes Ereignis am Computersystem 101 eintritt. Alternativ oder optional könnten die Log-Nachrichten 191 auch an das Orakel übertragen werden, bis das IDS bereit ist, diese Log-Nachrichten 191 abzuholen.

Als allgemeine Regel kann die Übertragung direkt oder über einen Proxy erfolgen, z.B. das Orakel.

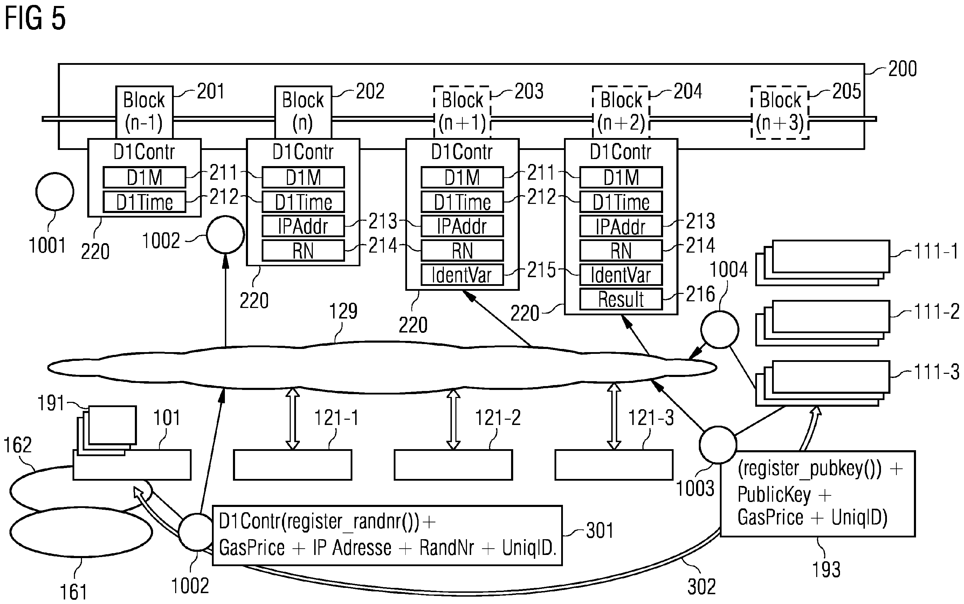

Um Block 2022 zu implementieren, kann sich das IDS 111 beim Computersystem 101 anmelden (vgl. 302 in Fig. 5).

Fig. 5 illustriert Aspekte im Zusammenhang mit einer beispielhaften Implementierung der Techniken zur Intrusionserkennung gemäß verschiedener Beispiele. Fig. 5 könnte z.B. die im Zusammenhang mit den Figs. 2 bis 4 voranstehend beschriebenen Beispiele beschreiben.

Das Beispiel der Fig. 5 verwendet das System 90. In Fig. 5 ist eine Blockkette 200 als verteilte Datenbank, die auf der Infrastruktur 129 implementiert wird, dargestellt. In FIG. 5 sind mehrere IDSs 111-1 - 111-3 vorhanden. Außerdem sind mehrere Mining-Knoten 121-1 - 121-3 vorhanden.

Die Blockkette 200 umfasst verkettete Blöcke 201-205.

Die Blockkette 200 speichert unter anderem Smart-Verträge 220 (in Fig. 5 mit D1Contr bezeichnet) für das IDS 111. Die Smart-Verträge 220 werden dazu verwendet, um durch einen dezentralen Mechanismus die Log-Nachrichten 191 des Computersystems 111 zu analysieren. Eine beispielhafte Implementierung betrifft den Smart-Vertrag 192.

Im Beispiel der Fig. 5 wird angenommen, dass die Technik zur Analyse von Log-Nachrichten, beispielsweise ein entsprechender Algorithmus, bereits in der Blockkette 200 der Blockketten-Infrastruktur 129 hinterlegt wurde, und zwar im Zusammenhang mit dem Smart-Vertrag (vgl. Block 201). Zum Beispiel könnte ein entsprechender maschinengelernter Algorithmus (in Fig. 5 mit D1M bezeichnet) über eine entsprechende Variable 211 in der Blockkette 200 hinterlegt sein. Die Variable kann den maschinengelernten Algorithmus selbst beinhalten oder einen Zeiger darauf implementieren.

Der Austausch der Log-Nachrichten 191 wird durch einen Ende-zu-Ende sicheren Kanal 302 ermöglicht. Die Autorisierung, welche IDSs 111-1 - 111-3 berechtigen, die Analyse der Log-Nachrichten 191 zur Intrusionserkennung durchzuführen, wird über die Smart-Verträge 220 und Mining-Knoten 121-1 - 121-3 und IDSs 111-1 - 111-3 ausgehandelt. Diese Funktionsweise wird nachstehend näher erläutert.

Zunächst wird auf Schritt 1001 Bezug genommen. Der Smart-Vertrag 220 Dlcontr ist in der Blockkette 200 gespeichert und wird periodisch, nachdem eine gewisse Zeit abgelaufen ist (z.B. alle 10 Minuten oder jeden Tag einmal), ausgeführt. Diese Zeit wird auch als Aktivierungsintervall bezeichnet und ist als Variable 212 D1Time im Smart-Vertrag 220 hinterlegt. Außerdem gibt D1Time Aufschluss darüber, wie lange der Smart-Vertrag 220 gültig ist. Auch ein externes Auslöseereignis wäre denkbar. Weiterhin ist in der Variable 211 D1M der maschinengelernte Algorithmus oder ein Hashwert des maschinengelernten Algorithmus hinterlegt. Der Algorithmus für die Analyse der Log-Nachrichten 191 kann also basierend auf dem Eintrag in der Variable 211 D1M in der Blockkette 200 ausgewählt werden.

Der Smart-Vertrag 220 kann spezifisch für das Computersystem 101 sein. Für ein anderes Computersystem kann ein anderer Smart-Vertrag verwendet werden.

Schritt 1002: Ist die durch die Variable 212 bestimmte Zeit abgelaufen, wird der Smart-Vertrag 220 D1Contr ausgeführt werden. Der Aufwecker 162 schickt hierzu einen Auftrag 301 an alle Mining-Knoten 121-1 - 121-3, die Funktion register_randnr() des Smart-Vertrags 220 D1Contr auszuführen und das Ergebnis der Funktion register_randnr() in der Blockkette 200 zu speichern. Außerdem schickt der Aufwecker als Inputparameter zur Funktion register_randnr() die Werte: Gas-Preis + IP Adresse + D1Contr + RandN + UniqID.

Der Unique Identifier UniqID ist ein Wert, der Aufschluss darüber gibt, welches der/die letzte(n) Block/Blöcke in der Blockkette 200 ist/sind. Hierbei kann es sich um ein Hashwert bzw. einen inhärenten Mechanismus der Blockkette 200 handeln, diese Identifikation durchzuführen.

RandN ist ein Zufallswert, der Aufschluss darüber gibt, welche IDSs 111-1 - 111-3 ihren öffentlichen Schlüssel/ihr Zertifikat in der Blockkette 200 speichern können, um im weiteren Verlauf die Analyse durchzuführen.

Nachfolgend werden ein paar beispielhafte Implementierungen im Zusammenhang mit den Schritten 1001 bzw. 1002 beschrieben.

Die Ausführung des Smart-Vertrags 220 D1Contr kann entweder von einem Aufwecker, dem Smart-Vertrag 220 bzw. dem Orakel angestoßen werden oder der Smart-Vertrag 220 führt sich selbst aus. Das bedeutet, dass ein Zeitgeber-Ereignis oder ein externer Trigger oder eine externe Anfrage das Ausführen des Smart-Vertrags 220 bewerten kann.

Der Gas-Preis gibt an, wie viel der Aufwecker gewillt ist, für die Abarbeitung des Smart-Vertrags 220 zu bezahlen. War der Gas-Preis zu niedrig, könnte es unter Umständen sein, dass der Smart-Vertrag 220 bzw. register_randnr() von den Mining-Knoten 121-1 - 121-3 nicht ausgeführt worden ist und die Mining-Knoten 121-1 - 121-3 andere noch lukrativere Smart-Verträge bearbeitet haben. Daher existiert die Möglichkeit, den Gas-Preis stückweise, ähnlich wie bei einer Auktion, zu erhöhen, bis der Smart-Vertrag erfolgreich ausgeführt und das Ergebnis von register_randnr() in der Blockkette 200 gespeichert wurde (Angebot-Nachfrage Preisbildung). Das bedeutet, dass durch einen vordefinierten Gas-Preis - etwa ein Preisfenster - verhindert werden kann, dass gewisse IDSs einen viel zu hohen Gas-Preis anbieten und somit gleich als IDSs von den Mining-Knoten ausgewählt werden. Auch die Gas Price Erhöhung sollte geregelt und transparent für alle IDS-Analyse Nodes erhöht werden, sodass sich hier für Angreifer keine Sicherheitslücken ergeben.

Die IP Adresse zeigt auf die Adresse des Computersystems 101. Die IP-Adresse kann auch die eines Proxy-Servers sein. Ein Proxy-Server könnte notwendig sein, falls das Computersystem 101 hinter einer Firewall betrieben wird. Die IP-Adresse wird, ebenfalls durch die Funktion register_randnr(), in der Variable IPAddr in D1Contr abgespeichert. Die Variable IPAddr könnte auch ein Zeiger auf eine weitere Speicherstelle sein. Die weitere Speicherstelle könnte die eigentlichen Informationen beinhalten, um die Kommunikation mit dem Computersystem 101 aufzubauen (z.B. IP Adresse mit weiteren zusätzlichen Informationen notwendig zur erfolgreichen Kommunikation).

RandN ist ein Zufallswert und könnte wie folgt von den Geräten in (I) generiert werden:
RandN= Hash(Zufallszahl|aktuelleUhrzeit+Datum) oder RandN= Hash(aktuelle Blocknummer).

UniqID ist ein Hashwert, welcher über die letzten n Blöcke 201-205 in der Blockkette 200 generiert wird (z.B. sei x=3: UniqID = Hash (Blockₙ₋₂ |Blockₙ₋₁ | Blockₙ)).

Die Funktion register_randnr() des Smart-Vertrag 220 D1Contr führt folgende Berechnung aus: RN=Hash(RandN|UniqID). Das Ausführen des Smart-Vertrags 220 beruht also auf der Zufallskomponente RandN. Unterstützt die Blockketteninfrastruktur 129 und/oder der Smart-Vertrag 192 und/oder der Aufwecker 162 und/oder das Orakel 161 keinen Zufallswert RandN, so kann auch nur RN=Hash(UniqID) verwendet werden.

Alle Mining-Knoten 121-1 - 121-3, die den Auftrag des Aufweckers 162 interessant finden, führen die Funktion register_randnr() aus. Anschließend versuchen die Mining-Knoten 121-1 - 121-3, einen neuen validen Block 202 für die Blocckette 200 zu erstellen, indem diese ein kryptographisches Rätsel (z.B. Proof-of-Work, Proof-of-Stake) zu lösen versuchen. Der Mining-Knoten 121-1- - 121-3, welcher es als erstes schafft, das Rätsel zu lösen, erstellt den neuen Block 202, speichert diesen Block 202 mit dem Wert RN in dem Smart-Vertrag 220 D1Contr ab und erhält eine Bezahlung. In diesem Block 202 wird neben dem Wert RN auch die IP-Adresse des Computersystems 101 unter er Variable 213 IPAddr gespeichert. Dabei ist die Implementierung der Variable 213 als IP-Adresse aber optional; es könnten alternativ oder zusätzlich auch ein oder mehrere andere Werte verwendet werden, um die Verbindung zum Computersystem 101 aufzubauen, etwa wenn eine Firewall verwendet werden. Wenn das Computersystem 101 hinter Firewall liegt können auch weitere Parameter hinzugefügt werden, um die Pakete durch die Firewall routen zu können. Oder die Kommunikation findet über einen Proxy statt, so benötigt man weniger Parameter, da sich das Proxy um das Routing und die Firewall-Problematik kümmert.

Manchmal bieten Smart-Verträge nicht die Möglichkeit, dass Mining-Knoten 121-1 - 121-3 eine Zufallszahl generieren und diese in der Blockkette 200 abspeichern. Daher wurde im beschriebenen Beispiel die Zufallsgenerierung auf die Seite des Aufweckers 162/Orakels 161 verschoben (d.h. der Wert RandN). In anderen Smart-Verträgen 222 könnte es jedoch möglich sein, dass Mining-Knoten 121-1 - 121-3 einen Zufallswert (z.B. RandN oder ähnlich) generieren und diesen in der Variable 214 RN im Smart-Vertrag 220 ablegen. Dies ist ein interessanter Ansatz, da nicht deterministisch ist, welcher Mining-Knoten 121-1 - 121-3 einen neuen Block generiert und daher auch die Zufallszahl, welche endgültig in der Blockkette 200 gespeichert wird, somit zufällig durch einen Knoten ausgewählt wäre.

Da nicht sicher ist, ob die Mining-Knoten 121-1 - 121-3 Erfolg haben werden, kann es manchmal erstrebenswert sein, gegen Replay-Angriffe eine Sicherheit herzustellen. Um Replay-Angriffe zu verhindern, wird die UniqID auch als Inputparameter für die Funktion register_randnr()verwendet. Das bedeutet, dass das Ausführen des der Funktion register_randnr() eine Authentifikation mittels der UniqID erfordert; diese UniqID ist - wie obenstehend beschrieben - ein Wert, der Aufschluss darüber gibt, welches der/die letzte(n) Block/Blöcke in der Blockkette 200 ist/sind. Das bedeutet also, dass das Ausführen des Smart-Vertrags auch von einer Authentifikation auf Grundlage der Blockkette 200 abhängt. Zum Beispiel könnte eine Manipulation der Blockkette derart erkannt werden. Alternativ und/oder zusätzlich könnten Replay-Angriffe derart verhindert bzw. erkannt werden.

Schritt 1003: Es wird angenommen, dass der Gas-Preis lukrativ war und dass 2/3 aller Mining-Knoten 121-1 - 121-3 den Auftrag angenommen haben. Das Resultat, d.h. die Variable 214 RN der Funktion register_randnr() und die IP-Adresse als Variable 213 IPAddr ist in dem Block 202 gespeichert. Da das Ausführen des Smart-Vertrags 220 auch in Abhängigkeit der Zufallszahl RandN (d.h. der Smart-Vertrag 220 umfasst eine Zufallskomponente) erfolgt, ist der Wert der Variable 214 RN zufällig gewählt und gibt Aufschluss darüber, welche IDSs 111-1 - 111-3 mit einer entsprechenden Autorisierung 193 aufgefordert werden, die Analyse durchzuführen.

Der Wert der Variable 214 RN ist also zufällig gewählt und gibt Aufschluss darüber, welche IDSs 111-1 - 111-3 aufgefordert werden, eine Bewerbung zum Durchführen der Intrusionserkennung abzugeben. Das bedeutet, dass der Wert der Variable 214 RN also einer Vorauswahl von IDSs 111-1 - 111-3 entspricht, im Rahmen der Autorisierung. Diese Vorauswahlkönnte wie folgt realisiert werden:
In einem ersten Beispiel: Alle IDSs 111-1 - 111-3, deren letzte 8 Bit des öffentlichen Schlüssels den letzten 8 Bit der Variable 214 RN entsprechen, sind legitimiert, sich in der Blockkette 200 unter der Variable 215 IdentVar registrieren zu lassen.

In einem zweiten Beispiel: Die Funktion Modulo₂₅₆(RN) und Modulo₂₅₆(PublicKey) resultiert mit einem 8 Bit großen Wert. Alle IDSs 111-1 - 111-3, bei denen die Werte übereinstimmen, sind legitimiert, sich in der Blockkette 200 unter der Variable 215 IdentVar registrieren zu lassen.

Es existieren zahlreiche weitere Beispiele, diesen Auswahlmechanismus zu implementieren, z.B. Quersumme über RN und Zertifikat.

Aus obenstehendem ist ersichtlich, dass die Variable RN 214 typischerweise auf eine Vielzahl von vorausgewählten IDSs 111 zutrifft. Manchmal werden jedoch nur ein einzelnes oder eine bestimmte Anzahl von IDS benötigt, um die Intrusionserkennung durchzuführen. Aus diesem Grund wird manchmal nur ein Teil der IDS, die die basierend auf RN bestimmte Auswahlbedingung erfüllen, ausgewählt. Die vorausgewählten IDSs werden dann in der Blockkette 200 unter der Variable 215 IdentVar abgespeichert. Aus diesem Grund kann es in manchen Beispielen erstrebenswert sein, dass die IDSs auch an der Verhandlung zur Erstellung der Variable 215 IdentVar teilnehmen: dies kann z.B. eine Bewerbung zur Hinterlegung von Registierungsinformation umfassen. Wenn die Registrierungsinformation tatsächlich in der Blockkette 200 hinterlegt wird, ist die Autorisierung abgeschlossen.

Als Beispiel wird angenommen, dass 3 IDSs für die Intrusionserkennung bzw. die Analyse der Log-Nachrichten 191 gesucht werden und 30 IDS-Kandidaten durch die Variable RN 214 legitimiert werden. Diese 30 IDS-Kandidaten können sich alle in Schritt 1003 bewerben, um Ihre Identität im Rahmen der Registrierungsinformation in der Variable IdentVar 215 zu speichern. Die ersten drei Kandidaten-IDS, die es schaffen, sich zu registrieren, erhalten die Autorisierung, um über den Kanal 302 die Log-Nachrichten zur Analyse zu empfangen. Die Auswahl der drei IDSs ist zufällig, da nicht bestimmt werden kann, welcher Mining-Knoten 121 der Blockketten-Infrastruktur 129 das zugehörige kryptographische Puzzle (zur Hinterlegung der Variable IdentVar 215 im Block 203) lösen wird und somit welche IDSs schlussendlich die Autorisierung erhalten.

So kann also eine doppelte Sicherheit erreicht werden: Die Bestimmung des Ergebniswerts, d.h. der Variable 214 RN, umfasst den zufälligen Beitrag; außerdem gibt es bei der Hinterlegung der Registrierungsinformation in Form der Variable 215 IdentVar auch einen Wettbewerb, dessen Ausgang a-priori nicht bestimmt ist. Eine Manipulation zur Bevorzugung eines kompromittierten IDS 111-1 - 111-3 ist daher schwer oder nicht möglich.

Dies wird in noch weiteren Detail nachfolgend beschrieben: Diejenigen vorausgewählten IDSs 111-1 - 111-3 versuchen, ihren PublicKey als öffentliches, kryptographisches Schlüsselmaterial oder Ihr Zertifikat bzw. den Hash über diese Werte in dem Smart-Vertrag 220 unter der Variable 215 IdentVar durch Mining-Knoten 121-1 - 121-3 speichern zu lassen. Das bedeutet, dass Registrierungsinformation - die indikativ für die Identität der IDSs 111-1 - 111-3 ist - in der Blockkette 200 hinterlegt wird. Hierzu beauftragen die IDSe 111-1 - 111-3 die Mining-Knoten 121-1 - 121-3, dass diese die Funktion register_pubkey() des Smart-Vertrags 220 D1Contr ausführen sollen. Außerdem schicken die IDSs 111-1 - 111-3 folgende Inputparameter für die Funktion register_pubkey() an die Mining-Knoten 121-1 - 121-3: PublicKey + GasPrice + UniqID. Das entspricht Block 2003 aus Fig. 2. Anstatt öffentlicher Schlüssel kann auch das Zertifikat bzw. der Hash der Werte als Inputparameter der Funktion register_pubkey() an die Mining-Knoten 121-1- 121-3 gesandt werden, um sich in der Variable 215 IdentVar registrieren zu lassen.

Die Variable 215 IdentVar kann als ein Array der Länge x im Smart-Vertrag 220 realisiert sein, welches jeweils y Bits speichern kann. Beispiel: Soll der SHA-256 Hash des Zertifikats als Inputparameter der Funktion register_pubkey() an die Mining-Knoten 121-1 - 121-3 übermittelt werden und sollen drei IDSs 111-1 - 111-3 bevollmächtigt werden, die endgültige Analyse durchzuführen, so kann x als 3 und y als 256 gewählt werden.

Ist x=3, so können sich nur drei IDSs 111-1 - 111-3 zur Analyse der Log-Nachrichten 191 in dem Smart-Vertrag 220 speichern lassen. Da nicht sicher ist, welcher Mining-Knoten 121-1 - 121-3 das kryptographische Rätsel lösen kann, sind die IDSs 111-1 - 111-3, die registriert worden sind, als zufällig anzusehen.

Diese Zufallskomponente verhindert, dass Angreifer, die einige IDSs 111-1 - 111-3 kontrollieren, sich zielgerichtet zur Analyse bestimmter Computersysteme 111 registrieren können. Außerdem kann auch verhindert werden, dass ein IDS 111-1 - 111-3 übermäßig viel Gas-Preis zahlt, um sich registrieren zu können, denn so kann der Zufall ausgehebelt werden, da alle Mining-Knoten 121-1 - 121-3 gerne viel verdienen möchten und die Registrierungswünsche der Angreifer bevorzugen könnten.

Über eine Public-Key-Infrastructure kann verifiziert werden, ob die IDSs 111-1 - 111-3 tatsächlich vorausgewählt sind bzw. die Bewerbung absenden dürfen, um die Variable 215 IdentVar registrieren zu lassen. Diese Public-Key-Infrastructure-Validierung der Zertifikate/des öffentlichen Schlüssels könnte vom Smart-Vertrag 220 oder vom Orakel 161 oder vom Computersystem 101 oder nativ vom Mining-Knoten 121-1 - 121-3 durchgeführt werden.

Da nicht sicher ist, ob die Mining-Knoten 121-1 - 121-3 Erfolg haben werden, kann gegen Replay-Angriffe eine Sicherheit erstrebenswert sein. Um Replay-Angriffe zu verhindern, wird die UniqID auch als Inputparameter für die Funktion register_pubkey() verwendet.

Die IDSs 111-1 - 111-3 können auch die Funktion eines Computersystems 101 haben und auch an der Blockkette 200 teilnehmen, um eigene Log-Nachrichten von anderen Knoten der Bloccketten-Infrastruktur überprüfen zu lassen. So wird erreicht, dass die Menge an Geld im System immer zwischen allen Computersystemen zirkuliert und somit auf eine lange Sicht das gegenseitige Analysieren der Lognachrichten stabil funktioniert, ohne dass konstant von extern Geld in das System transferiert werden muss (Daher: das Geld verschwindet nicht und bleibt der Gemeinschaft erhalten. Es wechselt nur konstant den Besitzer zwischen den Computersystemen 101).

Aus der obenstehenden Beschreibung ist ersichtlich, dass die Mining-Knoten 121-1 - 121-3 also zum Ausführen des Smart-Vertrags 220 eingerichtet sein können, um das entsprechende Ergebnis in Form der Variable 214 RN zu erhalten. In Abhängigkeit von dieser Variable 214 RN kann dann eines der IDSs 111-1 - 111-3 ausgewählt werden und - z.B. unter Berücksichtigung einer Bewerbung und eines kryptographischen Rätsels - eine entsprechender Autorisierung 193 an dieses ausgewählte IDS 111-1 - 111-3 erteilt werden.

Die Identifikation des Computersystems 101 in Form der IP-Adresse als Variable 213 ist auch in der Blockkette hinterlegt. All dies kann dann von den ein oder mehreren ausgewählten IDSs 111-1 - 111-3 verwendet werden, um anschließend die Analyse durchzuführen. Entsprechende Beispiele wurden im Zusammenhang mit Fig. 2: Blöcken 2002 und 2004 beschrieben und werden nachfolgend noch in größerem Detail beschrieben, und zwar im Zusammenhang mit Schritt 1004.

Schritt 1004: Es wird angenommen, dass nun in Block 203 die Variable 215 IdentVar drei Einträge enthält. Diese Einträge entsprechen der Autorisierung 193, dass drei bestimmte IDSs 111-1 - 111-3 (aus einer Menge von Kandidaten-IDSs) die Analyse des Computersystems 101 durchführen sollen. Aus diesem Grund bauen genau diese IDSs 111-1 - 111-3 über einen Ende-zu-Ende gesicherten Kanal 302 die Verbindung zum Computersystem 101 mithilfe der IP Adresse (IPAddr) auf und authentisieren sich mit Ihrem PublicKey bzw. Zertifikat. Das heißt die ausgewählten IDSs 111-1 - 111-3 senden eine entsprechende Anfrage. Diese ist auch indikativ für die zuvor in der Blocckette 200 hinterlegte Registerinformation des jeweiligen IDSs 111-1 - 111-3, d.h. den öffentlichen kryptographischen Schlüssel und/oder das Zertifikat. Das Computersystem 101 sieht nach, ob der öffentliche Schlüssel bzw. das Zertifikat zu den Einträgen in der Variable 215 IdentVar passt und lässt die Verbindung zu (zusätzlich optional: bei Bedarf kann der öffentliche Schlüssel bzw. das Zertifikat der jeweiligen IDSs 111-1 - 111-3 mit einer PKI vom Computersystem 101 validiert werden). Ab diesem Zeitpunkt werden der maschinengelernte Algorithmus D1M und die Log-Nachrichten 191 vom Computersystem 101 zu den IDSs 111-1 - 111-3 übertragen. Die IDSs 111-1 - 111-3 analysieren die Log-Nachrichten mit dem maschinengelernten Algorithmus und speichern das Ergebnis entweder gleich, oder erst falls als ein Angriff erkannt worden ist, bzw. später am Ende der Periode D1Time in die Blockkette 200 (siehe Block 204) unter der Variable 216 Result oder sobald wie möglich. Das Ergebnis der Analyse wird also in der Blocckette 200 hinterlegt und/oder kann direkt an den Administrator und/oder dem Orakel und/oder einer dritten Instanz weitergeleitet werden

Nachfolgend werden einige optionale Implementierungsdetails im Zusammenhang mit Schritt 1004 beschrieben.

Die Log-Nachrichten 191 können entweder alle an einem Stück (z.B. immer 1 MegaByte) zur Analyse übertragen werden. Die Log-Nachrichten können aber auch als Stream (Log-Nachrichten-Stream) übertragen werden. Das heißt, dass sobald eine Log-Nachricht 191 vom Computersystem 101 generiert worden ist, diese über den Ende-zu-Ende-Kanal 302 an die IDSs 111-1 - 111-3 gesendet wird. Vorteil der zweiten Methode ist, dass ein Angreifer durch einen Log-Nachrichten-Stream seine Angriffsspur nicht verschleiern kann, da die Log-Nachrichten 191 bereits an die ausgewählten IDSs 111-1 - 111-3 übertragen worden sind. Würden die Log-Nachrichten alle als Ganzes übertragen werden, so besteht die Möglichkeit, dass der Angreifer, vor der nächsten Übertragung, seine Spur aus den Log-Nachrichten löschen könnte und so unentdeckt bleiben würde.

Die IDSs 111-1 - 111-3 erhalten über den Ende-zu-Ende-Kanal auch weitere Parameter wie beispielsweise den maschinengelernten Algorithmus. Über die Variable 211 D1M im Smart-Vertrag 220 kann die Authentizität und Integrität des maschinengelernten Algorithmus überprüft werden. Es ist auch möglich, den maschinengelernten Algorithmus als solchen in der Variable 211 D1M zu speichern. Falls dies der Fall ist, muss über den Ende-zu-Ende-Kanal der maschinengelernte Algorithmus nicht übertragen werden bzw. der maschinengelernte Algorithmus muss nicht von einer dritten Instanz übertragen werden.

Über eine Public-Key-Infrastructure kann verifiziert werden, ob die IDSs 111-1 - 111-3 tatsächlich autorisiert sind, die Log-Nachrichten 191 zu analysieren und daher einen Ende-zu-Ende-Kanal zum Computersystem 101 aufzubauen. Diese Public-Key-Infrastructure-Validierung der Zertifikate und/oder des öffentlichen Schlüssels könnte vom Smart-Vertrag 220 oder vom Orakel 161 oder vom Proxy und/oder vom Computersystem 101 (beim Computersystem 101: zum Zeitpunkt des Kommunikationsaufbaus des Ende-zu-Ende-Kanals) durchgeführt werden.

Die Ergebnisse der Analyse können entweder mit einem MultiSig Smart-Vertrag 220 in die Blockkette 200 gespeichert werden oder jedes IDS 111-1 - 111-3 verifiziert die Integrität der Log-Nachrichten 191 separat in einem neuen Block, indem es das Resultat in die Variable 216 Result des Smart-Vertrags 220 speichert. Die Variable 216 Result könnte ein Array mit x freien Speicherplätzen sein (x=3 in unserem Anwendungsbeispiel) .

Da der öffentliche Schlüssel der IDSs 111-1 - 111-3 in der Variable 215 IdentVar gespeichert ist, können nur diese IDSs 111-1 - 111-3 die Variable 216 Result beschreiben. Das Beschreiben erfolgt wieder über die Mining Nodes 121-1 - 121-3.

Zusammenfassend wurden voranstehend Techniken beschrieben, um eine Analyse der Log-Nachrichten 191 im Zusammenhang mit der Intrusionserkennung auf einer dezentralen Architektur durchzuführen, die auf Smart-Verträgen 220 und der Blockkette 200 aufbaut. Dies ist verschieden von Referenzimplementierungen, bei denen Log-Nachrichten 191 erstellt werden und zentral auf einer vertrauenswürdigen Instanz analysiert werden. Mittels der hierin beschriebenen Techniken kann eine solche zentrale Instanz durch die dezentrale Architektur basierend auf den Smart-Verträgen 220 sowie der Blockkette 200 ersetzt werden. Außerdem ermöglichen die hierin beschriebenen Techniken eine erhebliche Reduzierung der Größe der Smart-Verträge 220, wodurch die Betriebskosten für das Mining verringert werden. Ein Angreifer kann die Analyse der Log-Nachrichten 191 nicht oder nur schwer manipulieren, auch wenn er die Kontrolle über das Computersystem 101 erlangt hat.

Gemäß verschiedenen Beispielen wird die Analyse der Log-Nachrichten 191, beispielsweise mit einem maschinengelernten Algorithmus, nicht durch das Computersystem selbst durchgeführt. Dies beruht auf der Erkenntnis, dass das Computersystem selbst unter Umständen kompromittiert sein könnte. Durch die hierin beschriebenen Techniken wird es erschwert, dass der Angreifer in der Lage ist, die Mehrzahl aller Teilnehmer der Blockketten-Infrastruktur 129 in seine Kontrolle zu bringen, d.h. die Mining-Knoten 121-1 - 121-3 sowie die IDSs 111-1 - 111-3, um derart die Intrusionserkennung zu verfälschen. Konkret bedeutet das:
Bei einer Proof-of-Work-basierten Blockkette 200 muss der Angreifer mehr als 50% aller Rechenkapazität kontrollieren (50% Hürde), um falsche Ergebnisse in der Blockkette 200 speichern zu können. Unter Umständen kann diese Hürde auf 33% reduziert werden. Bei einer Proof-of-Stake-basierten Blockkette 200 muss der Angreifer mehr als 50% der Systemwährung kontrollieren, um falsche Ergebnisse in der Blockkette 200 speichern zu können. Außerdem verursachen falsche Berechnungen Strafzahlungen bei dieser Technologie, wodurch der Angriff wirtschaftlich unattraktiv werden könnte.

Der Angreifer kann nicht kontrollieren, welches IDS 111-1 - 111-3 in der Blockkette 200 (Variable 215 IdentVar) gespeichert wird und dadurch legitimiert bzw. autorisiert wird (Variable 214 RN, Zufallszahl), die Analyse durchzuführen. Daher hat der Angreifer kaum eine Chance, die Ergebnisse der Analyse zu manipulieren.

Der Angreifer kann durch Gegenmaßnahmen wie Gas Preisfenster oder konstante Gas Preis Werte nicht übermäßig viel Gas Preis zahlen, um vom Mining-Knoten bevorzugt zu werden. Außerdem erschwert auch hier die Variable 214 RN, dass der Angreifer nicht auswählen kann, wann er die Chance hat, sich für die Analyse der Log-Nachrichten bei den Mining-Knoten 121-1 - 121-3 zu bewerben.

Bei einem Stream von Log-Nachrichten 191 hat der Angreifer keine Chance, seine Anwesenheit bzw. den Angriffsvorgang aus den Log-Nachrichten 191 zu löschen, da diese bereits an die IDSs 111-1 - 111-3 übertragen worden sind. Dadurch kann nachvollzogen werden, was passiert ist und wie der Angriff ausgeführt worden ist. Bei einer Übertragung der Lognachrichten an das Orakel oder den Proxy, ist die Hürde sehr hoch seine Anwesenheit bzw. den Angriffsvorgang aus den Log-Nachrichten 191 zu löschen, da diese bereits an den Orakel oder den Proxy, und somit Integritäts- und Authentizitätsgeschützt an die IDSs 111-1 - 111-3, übertragen worden sind. Dadurch kann nachvollzogen werden, was passiert ist und wie der Angriff ausgeführt worden ist.

Ein weiterer Vorteil betrifft den Integritätsschutz: Ergebnisse der Analysen sind in der Blockkette 200 abgespeichert und daher von Angreifern im Nachhinein nicht veränderbar. Alle Teilnehmer der Blockketten-Infrastruktur 129 können sehen, welches Computersystem 101 vertrauenswürdig/integer ist und welches nicht.

Ein weiterer Vorteil betrifft Vertraulichkeit: Der Inhalt der Log-Nachrichten ist von Teilnehmern nicht lesbar, falls die Log-Nachrichten vom Computersystem 101 an das IDS 111-1 - 111-3 vertraulich und authentisch/integritätsgeschützt übertragen werden. Die Teilnehmer und Man-in-the-Middle Angreifer können nur die Ergebnisse der Analysen sehen und nachvollziehen, ob ein Computersystem 101 angegriffen worden ist oder nicht. Nur die legitimierten IDSs 111-1 - 111-3 können die Log-Nachrichten 191 lesen.

Ein weiterer Vorteil betrifft Skalierbarkeit und Wartung: Leichte Erweiterbarkeit der Peer-to-Peer Blockketten-Architektur. Nicht der Betreiber, sondern die Blockketten-Community ist verantwortlich mit all den Problemen der Skalierung und Wartung.

Ein weiterer Vorteil betrifft die Größe der Smart-Verträge 220 und die Kosten zum Betrieb der Blockkette 200. Die Größe der Smart-Verträge 220 ist reduziert und daher werden die Betriebskosten reduziert. Konkret bedeutet das: die reduzierte Rechenkomplexität der Smart-Verträge 220 bewirkt, dass dadurch den Mining-Knoten erheblich weniger bezahlt wird. Außerdem kann durch die reduzierte Größe der Smart-Verträge 220 eine hierin beschriebene Technik auch auf lightweight Infrastrukturen betrieben werden. Ein weiterer Vorteil betrifft Kostenreduktion: Minimale Kosten auf der Betreiberseite (keine Redundanzmechanismen, kein zentraler Server muss betrieben werden, kein Hochleistungssystem wird benötigt, keine Experten sind nötig, um die Blockketten-Infrastruktur zu warten, vorher nicht mögliche Business Cases könnten mit einer Bloccketten-basierten Architektur wirtschaftlich tragbar werden).

Die hierin beschriebenen Techniken können in unterschiedlichen Anwendungsfällen eingesetzt werden. Ein paar Anwendungsszenarien werden nachfolgend beispielhaft beschrieben. Ein erstes beispielhaftes Anwendungsszenario betrifft die Gebäudetechnologie. Hier können IoT-Geräte über Smart-Verträge Anomalien bzw. Log-Nachrichten analysieren. Beispiele für I-oT-Geräte sind zum Beispiel: intelligente Gebäudesteuerung, Sensoren oder Aktoren, etc. Ein weiteres Anwendungsszenario betrifft die Prozessindustrie und Antriebe, Energiemanagement und die digitale Fabrik: Industriekomponenten können sich selbst über die Blockkette von anderen Industriekomponenten kontrollieren lassen. Dies kann zum Beispiel in der Automatisierungstechnik, der Antriebstechnik, der Industriesoftware sowie bei Serviceleistungen hilfreich sein. Ein drittes Anwendungsszenario betrifft Mobilität: Signal- und Leittechnik im schienengebundenen Personen- und Güterverkehr, Elektrifizierungslösungen für den Bahn- und Straßenverkehr, Straßenverkehrssteuerung und Informationssysteme, Parkraummanagement sowie elektronische Bezahl- und Mautsysteme für den Stadtverkehr und Fernverkehr können durch solche hierin beschriebenen Techniken abgesichert werden.

Selbstverständlich können die Merkmale der vorab beschriebenen Ausführungsformen und Aspekte der Erfindung miteinander kombiniert werden. Insbesondere können die Merkmale nicht nur in den beschriebenen Kombinationen, sondern auch in anderen Kombinationen oder für sich genommen verwendet werden, ohne das Gebiet der Erfindung zu verlassen.

Beispielsweise wurden voranstehend verschiedene Beispiele beschrieben, bei denen eine Analyse zur Intrusionserkennung auf einem maschinengelernten Algorithmus basiert. Dies ist aber nur ein Beispiel. In anderen Beispielen kann z.B. ein statistischer Algorithmus oder eine Anomalieerkennung verwendet werden.

Beispielsweise wurden voranstehend verschiedene Beispiele beschrieben, bei denen ein Kanal 302 zwischen Computersystem 101 und IDS 111 erstellt wird. Dies ist aber nur ein Beispiel. In anderen Beispielen kann z.B. die Kommunikation zwischen dem Computersystem 101 und dem IDS 111 über ein Orakel oder ein Proxy getunnelt sein.

In den verschiedenen hierin beschriebenen Beispielen könnte der Algorithmus von einem Orakel oder einer dritten Instanz bestimmt werden.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/

## Patentansprüche

1. Analysegerät (111, 111-1, 111-2, 111-3) mit einem Prozessor (112) und einer Kommunikationsschnittstelle (114), wobei der Prozessor (112) eingerichtet ist, um Programmcode aus einem Speicher (113) zu laden und auszuführen und basierend darauf die folgenden Schritte auszuführen:
- Kommunizieren mit mindestens einem Knoten (121, 121-1, 121-2, 121-3) einer Infrastruktur (129) einer verteilten Datenbank (200) über die Kommunikationsschnittstelle (114), um eine Autorisierung (193, 214, 215) zur Intrusionserkennung eines Computersystems (101) zu erhalten, und
- in Abhängigkeit davon, ob die Autorisierung (193, 214, 215) erhalten wird: Durchführen der Intrusionserkennung des Computersystems (101) basierend auf einer Analyse von Log-Nachrichten (191) des Computersystems (101), die über die Kommunikationsschnittstelle (114) vom Computersystem (101) empfangen werden.

2. Analysegerät (111, 111-1, 111-2, 111-3) nach Anspruch 1, wobei die Autorisierung (193, 214, 215) auf einem Ergebniswert (214) eines Smart-Vertrags (192, 220), der von dem mindestens einen Knoten (121, 121-1, 121-2, 121-3) ausgeführt wird, basiert.

3. Analysegerät (111, 111-1, 111-2, 111-3) nach Anspruch 2, wobei der Prozessor (112) weiterhin eingerichtet ist, um basierend auf dem Programmcode den folgenden Schritt auszuführen:
- Durchführen einer Bewerbung zur Hinterlegung von Registrierungsinformation, die indikativ für eine Identität des Analysegeräts (111, 111-1, 111-2, 111-3) ist, in der verteilten Datenbank, in Abhängigkeit vom Ergebniswert (214).

4. Analysegerät (111, 111-1, 111-2, 111-3) nach Anspruch 3, wobei der Prozessor (112) weiterhin eingerichtet ist, um basierend auf dem Programmcode den folgenden Schritt auszuführen:
- Senden einer Anfrage zum Durchführen der Intrusionserkennung an das Computersystem (101), welche indikativ für die Registrierungsinformation ist.

5. Analysegerät (111, 111-1, 111-2, 111-3) nach Anspruch 4, wobei die Anfrage zumindest eines von einem öffentlichen kryptographischen Schlüsselmaterial und/oder einem Zertifikat des Analysegeräts (111, 111-1, 111-2, 111-3) umfasst.

6. Analysegerät (111, 111-1, 111-2, 111-3) nach einem der Ansprüche 3 bis 5,
wobei der Prozessor weiterhin eingerichtet ist, um basierend auf dem Programmcode den folgenden Schritt auszuführen:
- Nachschlagen in der verteilten Datenbank (200), um den Ergebniswert zu erhalten, und
- Vergleichen des Ergebniswerts mit der Registrierungsinformation,
wobei die Bewerbung in Abhängigkeit von dem Vergleichen wahlweise durchgeführt wird.

7. Analysegerät (111, 111-1, 111-2, 111-3) nach einem der voranstehenden Ansprüche,
wobei die Analyse auf mindestens einem Algorithmus basiert.

8. Analysegerät (111, 111-1, 111-2, 111-3) nach Anspruch 6, wobei der Prozessor (112) weiterhin eingerichtet ist, um basierend auf dem Programmcode den folgenden Schritt auszuführen:
- Auswählen des mindestens einen maschinengelernten Algorithmus basierend auf einem entsprechenden Eintrag in der verteilten Datenbank (200) oder basierend auf der Autorisierung (193).

9. Analysegerät (111, 111-1, 111-2, 111-3) nach einem der voranstehenden Ansprüche, wobei der Prozessor (112) weiterhin eingerichtet ist, um basierend auf dem Programmcode den folgenden Schritt auszuführen:
- Hinterlegen eines Ergebnisses der Analyse in der verteilten Datenbank (200).

10. Analysegerät (111, 111-1, 111-2, 111-3) nach einem der voranstehenden Ansprüche, wobei die Log-Nachrichten (191) über einen Ende-zu-Ende Kommunikationskanal (302) direkt vom Computersystem (101) empfangen oder über einen Proxy oder ein Orakel empfangen werden.

11. Knoten (121, 121-1, 121-2, 121-3) einer Infrastruktur (129) einer verteilten Datenbank (200) mit einem Prozessor (122) und einer Kommunikationsschnittstelle (124), wobei der Prozessor (122) eingerichtet ist, um Programmcode aus einem Speicher (123) zu laden und auszuführen und basierend darauf die folgenden Schritte auszuführen:
- Ausführen eines Smart-Vertrags (192, 220), um einen entsprechenden Ergebniswert (214) zu erhalten,
- Auswählen von mindestens einem Analysegerät (111, 111-1, 111-2, 111-3) aus einer Vielzahl von Analysegeräten in Abhängigkeit vom Ergebniswert (214), und
- Kommunizieren mit dem mindestens einen Analysegerät (111, 111-1, 111-2, 111-3) über die Kommunikationsschnittstelle, um dem mindestens einen Analysegerät (111, 111-1, 111-2, 111-3) eine Autorisierung (193, 214, 215) zur Intrusionserkennung eines Computersystems (101) zu erteilen.

12. Knoten (121, 121-1, 121-2, 121-3) nach Anspruch 11, wobei der Prozessor (122) weiterhin eingerichtet ist, um basierend auf dem Programmcode ein oder mehrere der folgenden Schritte auszuführen:
- Empfangen einer Bewerbung zur Hinterlegung von Registrierungsinformation vom mindestens einen Analysegerät (111, 111-1, 111-2, 111-3) und in Abhängigkeit vom Ergebniswert (214), wobei die Bewerbung indikativ für eine Identität des jeweiligen Analysegeräts (111, 111-1, 111-2, 111-3) ist,
- Hinterlegen der Registrierungsinformation in der verteilten Datenbank, um derart die Autorisierung (193, 214, 215) zu erteilen.

13. Knoten (121, 121-1, 121-2, 121-3) nach Anspruch 11 oder 12,
wobei das Ausführen des Smart-Vertrags (192, 220) zum Erhalten des entsprechenden Ergebniswerts (214) zumindest eines von einer Zufallskomponente, einer zeitvariablen Komponente, einer situationsvariablen Komponente und einer Authentifikation auf Grundlage der verteilten Datenbank (200) umfasst.

14. Knoten (121, 121-1, 121-2, 121-3) nach einem der Ansprüche 11 bis 13, wobei der Prozessor (122) weiterhin eingerichtet ist, um basierend auf dem Programmcode ein oder mehrere der folgenden Schritte auszuführen:
- Hinterlegen einer Identifikation des Computersystems (101) in der verteilten Datenbank (200), und/oder
- Hinterlegen des Ergebniswerts (214) in der verteilten Datenbank (200).

15. Knoten (121, 121-1, 121-2, 121-3) nach einem der Ansprüche 11 bis 14,
wobei der Smart-Vertrag (192, 220) ausgeführt wird, wenn ein Zeitgeber-Ereignis eintritt und/oder wenn eine externe Anfrage über die Kommunikationsschnittstelle (124) erhalten wird und/oder wenn ein Betriebs-bezogenes Ereignis am Computersystem (101) und/oder wenn ein externer Trigger eintritt.

16. Knoten (121, 121-1, 121-2, 121-3) nach einem der Ansprüche 11 bis 15,
wobei ein Gas-Preis für das Ausführen des Hinterlegens der Registrierungsinformation in der verteilten Datenbank vordefiniert ist.

17. Computersystem (101) mit einem Prozessor (102) und einer Kommunikationsschnittstelle (104), wobei der Prozessor (102) eingerichtet ist, um Programmcode aus einem Speicher (103) zu laden und auszuführen, und basierend darauf die folgenden Schritte auszuführen:
- Empfangen einer Registrierungsinformation von einem Analysegerät (111, 111-1, 111-2, 111-3) und über die Kommunikationsschnittstelle (104), wobei die Registrierungsinformation indikativ für eine Identität des Analysegeräts (111, 111-1, 111-2, 111-3) ist,
- Auslösen einer Verifikation der Registrierungsinformation auszulösen, und
- in Abhängigkeit von einem Ergebnis der Verifikation: Übertragen von Log-Nachrichten (191) des Computersystems (101) an das Analysegerät (111, 111-1, 111-2, 111-3) und über die Kommunikationsschnittstelle (104).

18. System (90), das umfasst:
- das Analysegerät (111, 111-1, 111-2, 111-3) nach Anspruch 1,
- den Knoten (121, 121-1, 121-2, 121-3) nach Anspruch 11, und
- das Computersystem nach Anspruch 17.
